# EUROPEAN PATENT SPECIFICATION

(11) **EP 2 742 723 B1**
(45) Date of publication and mention of the grant of the patent: **14.10.2015**
(21) Application number: 12824486.0
(22) Date of filing: 23.07.2012
(51) Int. Cl.: H04W 4/18, H04W 4/20, H04L 29/08

(54) **ZERO-CLICK PHOTO UPLOAD**
HOCHLADEN VON FOTOS OHNE KLICKEN
TÉLÉCHARGEMENT PHOTO SANS CLIC

(30) Priority: 12.08.2011 US 201113209214
(43) Date of publication of application: 18.06.2014
(73) Proprietor: Facebook, Inc., Menlo Park, CA 94025 (US)
(72) Inventor: TSENG, Erick, Menlo Park, CA 94025 (US)
(74) Representative: Schröer, Gernot H.
(86) International application number: PCT/US2012/047813
(87) International publication number: WO 2013/025313

(56) References cited:
- EP-A1- 2 007 128
- US-A1- 2002 037 711
- US-A1- 2006 026 294
- US-A1- 2011 061 086
- US-A1- 2011 061 086

## Description

### TECHNICAL FIELD

The present disclosure relates generally to a social networking service and, more particularly to a system for automatically uploading multimedia objects from members of the social networking service.

### BACKGROUND

A social networking system, such as a social networking website, enables its users to interact with it and with each other through the system. The user profile may include a user's demographic information, contact information, and personal interests. A user may install a software application or client on a mobile phones that allows him to remotely interact with the social network via a mobile data connection.

EP 2007 128 A1 discloses resizing images prior to upload, wherein, in dependence upon upload size restrictions, the original image is resized to meet the upload size restriction or to the user selected desired image size.

### SUMMARY

Particular embodiments relate to automatically uploading a multimedia object from a client device of a member of a network application service (such as social networking system) to the network application service. Particular embodiments relate to adjusting the upload quality based on the detected wireless connectivity, and maintaining a queue in the client device for the automatic upload of multimedia objects. These and other features, aspects, and advantages of the disclosure are described in more detail below in the detailed description and in conjunction with the following figures.

### BRIEF DESCRIPTION OF THE DRAWINGS

Figure 1 illustrates an example social networking system.
Figure 2 illustrates example client device interface.
Figure 3 illustrates an example method of uploading multimedia objects.
Figure 4 illustrates an example data structure representing a queue of multimedia objects.
Figure 5 illustrates another example data structure representing a queue of multimedia objects.
Figure 6 illustrates a detailed queue of multimedia objects in accordance with an embodiment of the disclosure.
Figure 7 illustrates an example computer system.
Figure 8 illustrates an example mobile device platform.

### DETAILED DESCRIPTION

The invention is now described in detail with reference to a few embodiments thereof as illustrated in the accompanying drawings. In the following description, numerous specific details are set forth in order to provide a thorough understanding of the present disclosure. It is apparent, however, to one skilled in the art, that the present disclosure may be practiced without some or all of these specific details. In other instances, well known process steps and/or structures have not been described in detail in order not to unnecessarily obscure the present disclosure. In addition, while the disclosure is described in conjunction with the particular embodiments, it should be understood that this description is not intended to limit the disclosure to the described embodiments. To the contrary, the description is intended to cover alternatives, modifications, and equivalents as may be included within the spirit and scope of the disclosure as defined by the appended claims.

A social networking system, such as a social networking website, enables its users to interact with it, and with each other through, the system. Typically, to become a registered user of a social networking system, an entity, either human or non-human, registers for an account with the social networking system. Thereafter, the registered user may log into the social networking system via an account by providing, for example, a correct login ID or username and password. As used herein, a "user" may be an individual (human user), an entity (e.g., an enterprise, business, or third party application), or a group (e.g., of individuals or entities) that interacts or communicates with or over such a social network environment.

When a user registers for an account with a social networking system, the social networking system may create and store a record, often referred to as a "user profile", in connection with the user. The user profile may include information provided by the user and information gathered by various systems, including the social networking system, relating to activities or actions of the user. For example, the user may provide his name, profile picture, contact information, birth date, gender, marital status, family status, employment, education background, preferences, interests, and other demographical information to be included in his user profile. The user may identify other users of the social networking system that the user considers to be his friends. A list of the user's friends or first degree contacts may be included in the user's profile. Connections in social networking systems may be in both directions or may be in just one direction. For example, if Bob and Joe are both users and connect with each another, Bob and Joe are each connections of the other. If, on the other hand, Bob wishes to connect to Sam to view Sam's posted content items, but Sam does not choose to connect to Bob, a one-way connection may be formed where Sam is Bob's connection, but Bob is not Sam's connection. Some embodiments of a social networking system allow the connection to be indirect via one or more levels of connections (e.g., friends of friends). Connections may be added explicitly by a user, for example, the user selecting a particular other user to be a friend, or automatically created by the social networking system based on common characteristics of the users (e.g., users who are alumni of the same educational institution). The user may identify or bookmark websites or web pages he visits frequently and these websites or web pages may be included in the user's profile.

A social network system may maintain social graph information, which can generally model the relationships among groups of individuals, and may include relationships ranging from casual acquaintances to close familial bonds. A social network may be represented using a graph structure. Each node of the graph corresponds to a member of the social network. Edges connecting two nodes represent a relationship between two users. In addition, the degree of separation between any two nodes is defined as the minimum number of hops required to traverse the graph from one node to the other. A degree of separation between two users can be considered a measure of relatedness between the two users represented by the nodes in the graph.

The social networking system may also support a privacy model. A user may or may not wish to share his information with other users or third-party applications, or a user may wish to share his information only with specific users or third-party applications. A user may control whether his information is shared with other users or third-party applications through privacy settings associated with his user profile. For example, a user may select a privacy setting for each user datum associated with the user and/or select settings that apply globally or to categories or types of user profile information. A privacy setting defines, or identifies, the set of entities (e.g., other users, connections of the user, friends of friends, or third party application) that may have access to the user datum. The privacy setting may be specified on various levels of granularity, such as by specifying particular entities in the social network (e.g., other users), predefined groups of the user's connections, a particular type of connections, all of the user's connections, all first-degree connections of the user's connections, the entire social network, or even the entire Internet (e.g., to make the posted content item index-able and searchable on the Internet). A user may choose a default privacy setting for all user data that is to be posted. Additionally, a user may specifically exclude certain entities from viewing a user datum or a particular type of user data.

A social networking system may support a variety of applications, such as photo sharing, on-line calendars and events. For example, the social networking system may also include media sharing capabilities. For example, the social networking system may allow users to post photographs and other multimedia files to a user's profile, such as in a wall post or in a photo album, both of which may be accessible to other users of the social networking system. A member of the social network may install a multimedia-sharing application on his or her mobile phone equipped with an on-board camera or sound recorder, and may manually upload photos, audio, and video taken with the mobile phone camera and saved locally on the camera to the social networking site over a wireless data connection.

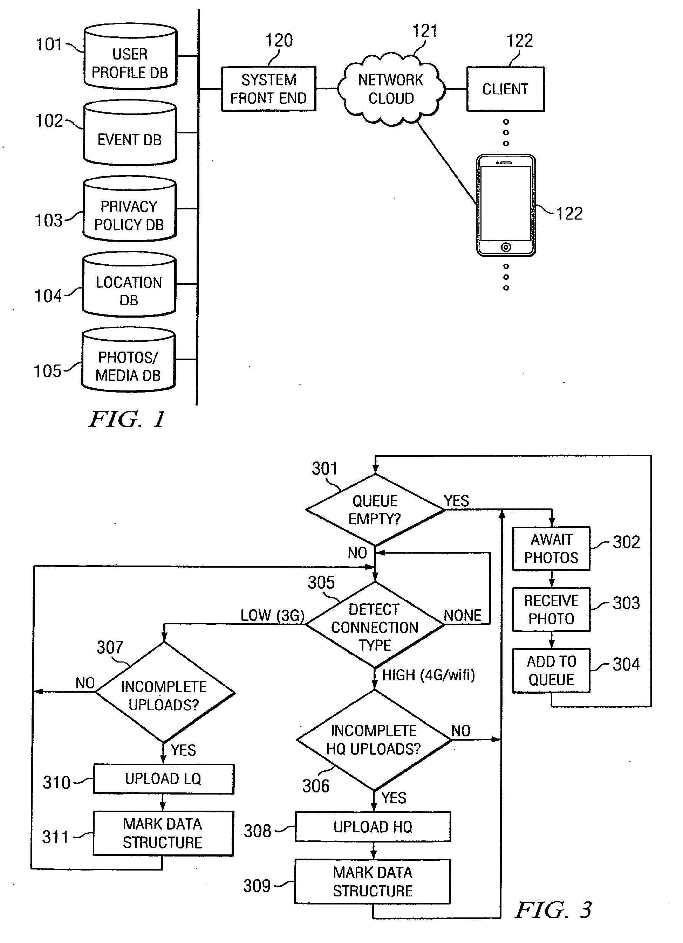

FIGURE 1 illustrates an example social networking system. In particular embodiments, the social networking system may store user profile data and social graph information in user profile database 101. In particular embodiments, photos uploaded by users are stored in photos/media database 105. In particular embodiments, the social networking system may store user event data in event database 102. For example, a user may register a new event by accessing a client application to define an event name, a time and a location, and cause the newly created event to be stored in event database 102. In particular embodiments, the social networking system may store user privacy policy data in privacy policy database 103.

In particular embodiments, the social networking system may store geographic and location data in location database 104. In particular embodiments, the social networking system may store advertisement data in advertisement database 105. For example, an advertiser may store advertisement content (e.g., messages, graphic arts, video clips) and related information (e.g., locations, targeting criteria) in advertisement database 105. In particular embodiments, databases 101, 102, 103, 104, and 105 may be operably connected to the social networking system's front end. In particular embodiments, the front end 120 may interact with client device 122 through network cloud 121. Client device 122 is generally a computer or computing device including functionality for communicating (e.g., remotely) over a computer network. Client device 122 may be a desktop computer, laptop computer, personal digital assistant (PDA), in- or out-of-car navigation system, smart phone or other cellular or mobile phone, or mobile gaming device, among other suitable computing devices. Client device 122 may execute one or more client applications, such as a web browser (e.g., Microsoft Windows Internet Explorer, Mozilla Firefox, Apple Safari, Google Chrome, and Opera, etc.) or special-purpose client application (e.g., Facebook for iPhone, etc.), to access and view content over a computer network. Front end 120 may include web or HTTP server functionality, as well as other functionality, to allow users to access the social networking system. Network cloud 121 generally represents a network or collection of networks (such as the Internet or a corporate intranet, or a combination of both) over which client devices 122 may access the social network system.

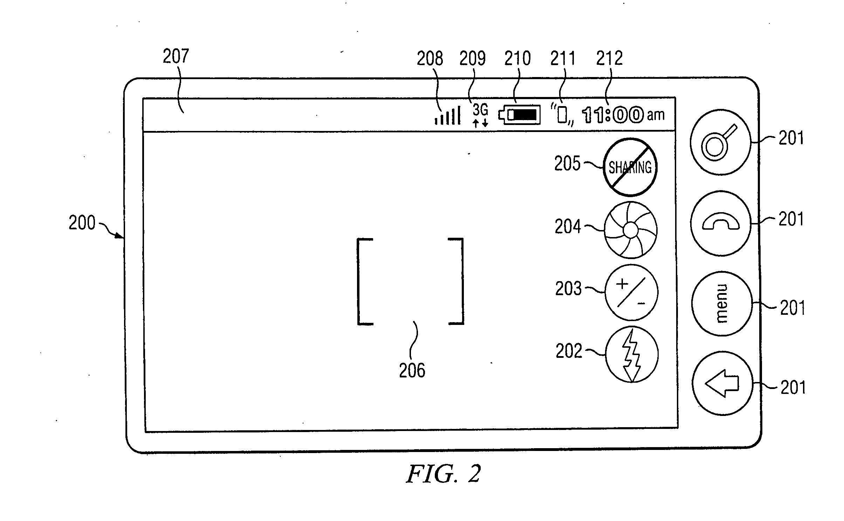

FIGURE 2 illustrates an example client device 122 that includes multiple wireless data connection modes, as well as an on-board camera. For didactic purposes, client device 122 is depicted in FIGURE 2 as a mobile phone in the camera shooting mode. Client device 122 includes a series of controls 201 for accessing various phone functions and applications. Display 206 may include a series of icons in camera shooting mode, including flash control 202, zoom control 203, shutter button 204, and sharing icon 205. In particular embodiments, these controls may be mapped to physical hardware buttons 201. In particular embodiments, as shown, controls 202-205 are displayed as part of touch screen display 206. Sharing icon 205 will be discussed in greater detail below. In particular embodiments, display 206 may include a rendered status bar 207. In particular embodiments, status bar 207 may include icons indicating vital phone states to the user, such as signal strength indicator 207, connection type 208, battery life 210, ringer mode 211, and current time 212. Connection type 208 may indicate the type of wireless connection available or utilized by the mobile phone. For example, where a data network is not available, connection type 208 may indicate a "voice-only" mode. As an example not by way of limitation, connection type 208 may indicate second generation (2G) data networks such as EDGE or GPRS, third-generation (3G) data networks such as CDMA2000, EV-DO, HSPA, EGRPS, and GSM UMTS, fourth-generation (4G) data networks such as CDMA LTE and UMB, and other high-speed networks such as WiFi (IEEE 702.11) and WiMAX (IEEE 702.16). This disclosure contemplates any suitable wireless data connection operating at any data rate.

Client device 122, although depicted as a mobile phone in FIGURE 2, may be any device that has both wireless data connectivity and access to multimedia files. For example, client device may be a laptop computer or tablet PC with a wireless data modem accessing a collection of multimedia files from local storage such as a hard disk, SD/MMC/CF/XD removable solid state storage, or the like. The storage need not be local to client device 122. In particular embodiments, client device 122 may access multimedia files from remote storage, such as a network attached storage device, or an online multimedia storage website, such as (Yahoo! Flickr or Google Picasa). In particular embodiments, client device 122 need not have a direct connection to wireless data networks. For example, client device 122 may be connected to a wireless data network through Bluetooth tethering. This disclosure contemplates any type of wireless data connection accessible by client device 122. For the purposes of this disclosure, "multimedia" encompasses a broad range of file types, including without limitation, digital still photographs, digital video files, digital audio files, animated photo files, flash animations, and the like. Although the foregoing exemplary methods discloses photo sharing, this disclosure contemplates any manner of multimedia, and the term "photos" can be substituted for any type of multimedia object.

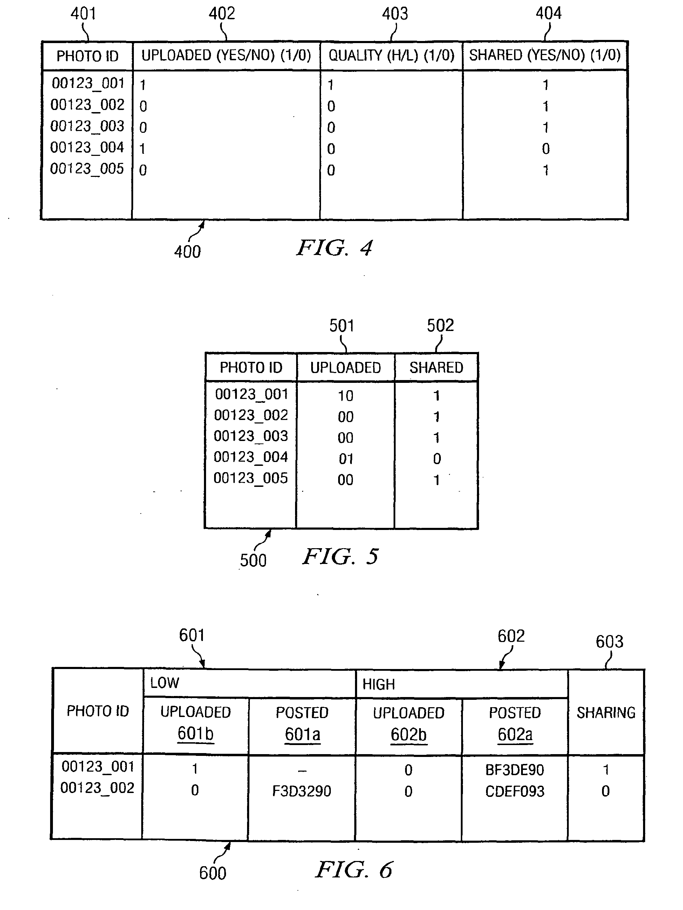

FIGURE 3 is a flowchart of an example method directed to automatically uploading multimedia files to a network application service, such as a social networking site. FIGURE 3 details a software process that is constantly running on client device 122 as a background process generally, when a user selects continuous operation as an option, or when one or more applications (such as a camera application) are initiated. In particular embodiments, the software process is only run periodically to save battery and radio resources. In particular embodiments, the software process may be terminated by a user to conserve client device 122 resources. Photos accessible by the software process of FIGURE 3 are stored in a queue data-structure as disclosed in FIGURES 4 and 5. In one embodiment, client device 122 has an on-board camera device, and photos taken with the on-board camera are immediately stored in the local storage of client device 122, while pointers to the photos are pushed onto a a queue maintained in a memory (either dynamic or persisent) of client device 122. In particular embodiments, photos are taken with an external device and stored on removable or remote media. In such embodiments, the queue may be stored either on the removable or remote media, or local to client device 122. Regardless of the location of the queue or the photo storage, the software process of FIGURE 3 may read from and write to the queue whenever the process is running. For didactic purposes and not by way of limitation, this disclosure describes an embodiment wherein client device 122 is a mobile phone that includes an on-board camera, and stores saved photos in local storage and pointers to the photos on a queue local to the mobile phone memory.

At Step 301, the software process determines whether the queue of photos is empty. If the queue is empty, and no photos are stored in the queue, the process awaits photos in Step 302. Step 302 may be considered the "idle" phase of the software process of FIGURE 3. This process requires very little resources in terms of CPU, memory, battery life, or radio link usage. The process remains in this state until a photo is received in Step 303. In the example described above, the photo is received from a camera application residing on client device 122. However, this disclosure contemplates any means of receiving a photograph. At Step 304, the software process adds a pointer to the received photo to the queue, and returns to Step 301. This disclosure contemplates any type of queuing. In particular embodiments, the queue is a first-in-first-out (FIFO) queue. In particular embodiments, the queue is a first-in-last-out (FILO) queue. In particular embodiments, the application selects photos for upload identified in the queue based on characteristics of the photo, such as size, time of shooting, subject, content, format, location of shooting, special user tags, and the like. In particular embodiments, the software process maintains two separate queues, a high priority queue and a low priority queue. Photos in the high priority queue are always selected for upload before photos in the low priority queue, and both queues can operate in a FIFO fashion. This disclosure contemplates any type of queuing or ordering of photos for upload.

If the software process determines at Step 301 that the queue is not empty, the software process attempts to detect a wireless data connection in Step 305. If a connection is not available, the process remains at Step 305 and attempts to establish any suitable data connection. In particular embodiments, the various types of data connections may be broadly grouped into two categories, "Low" and "High." In particular embodiments, data connections with a data rate under a predetermined threshold, such as 3G and slower data connections, are grouped into the low-bandwidth category. In particular embodiments, data connections with a data rate above a predetermined threshold, such as WiFi, 4G, and WiMax, are grouped into a high-bandwidth category. For didactic purposes, this disclosure is described as having two connectivity categories, "Low" (3G and below" and "High" (WiFi, 4G, WiMax, and above). However, this disclosure is not limited to two categories, and contemplates any number of data connection categories based on bandwidth, cost and other factors.

Based upon the determined connection type, software application determines what kind of photo file to upload for each photo. Because the above paragraphs describe two broad categories of data connections, FIGURE 3 respectively depicts two broad categories of photo files. However, one of ordinary skill in the art could envision multiple types of photo files dependent on the determined data connection category or type. The number of types of photo files need not correlate with the number of connection categories on a one-to-one ratio. This disclosure contemplates any number of photo file types. In particular embodiments, when the software process determines that only low-bandwidth data connections (3G and below) are available, the software process generates a low-quality photo file for upload. A low quality photo may be a photo of reduced resolution, color depth, increased compression, increased compression file format, more tightly cropped, or any combination of the aforementioned factors. For example, a photo shot in RAW format at 7 Megapixels (7MP) may exceed 10 Megabytes, and would take a prohibitive amount of bandwidth to upload over a low-bandwidth data connection. In such a case, the software process may apply any number of size-reducing processes, including but not limited to reducing the resolution, color depth, or applying compression, to generate a separate low-quality photo file. In particular embodiments, the low quality photo file is generated as soon as the photo is saved to the queue. In particular embodiments, the low quality photo file is generated immediately preceding the upload of the low quality photo file. This disclosure contemplates any suitable manner and timing of generating the low quality photo file.

Similarly, if a high-bandwidth connection type is detected, the software process may generate a high quality photo file. In particular embodiments, the high quality photo file is the photo in unmodified native form. In particular embodiments, the high quality photo file is reduced in resolution, size, or compressed, but to a lesser extent relative to the low quality photo file. As disclosed above, any combination of actions such as reducing resolution, tighter cropping, reducing color depth, increasing compression, conversion to an increased compression file format (such as JPEG), may be used to generate a high-quality file. This disclosure envisions any number or combination of operations to generate the high quality photo file, so long as its quality is relatively greater than the low quality file. In particular embodiments, where the high quality photo file is the photo in native, unmodified form, no separate high quality photo file is generated. In particular embodiments, the high quality photo file is generated at the time it is shot and saved to the queue. In particular embodiments, the high quality photo file is generated immediately preceding the high quality upload. This disclosure contemplates any suitable manner and timing of generating the high quality photo file.

At Step 307, having detected a low bandwidth data connection, the software process analyzes the photo queue and searches for incomplete uploads. As further discussed with respect to FIGURES 4 and 5, the data structure for the photo queue includes several status bits for each photo in the queue, including whether the photo has been successfully uploaded, and the quality at which it was uploaded. If the software process finds no incomplete uploads, the process returns to Step 305. This looping between 305 to 307 continues as a background process until a high bandwidth data connection is detected.

If, at Step 307, the software process finds indicators that certain photos have incomplete uploads, then the process uploads low quality photo files corresponding to those photos at Step 310. In particular embodiments, resuming an upload is possible. For example, if a user is mid-upload and suddenly loses his or her data connection due to powering down client device 122 or radio interference (such as entering a tunnel or elevator), the software process will save a pointer to the most recently uploaded segment of the photo file, and resume the upload at the next segment in the photo file. Pausing and resuming uploads is well-known in the art and the technical details of the pause/resume function will not be described herein. Therefore, any low quality photo file that has not been fully uploaded is uploaded at Step 310. Step 307 only searches for photos with incomplete uploads. The software process generally favors high quality photos to low quality photos; in fact it guarantees the eventual delivery/upload of high quality photo files. Therefore, a photo in the queue whose data structure entry reflects that it has previously been uploaded at high quality is not picked up by Step 307 as an incomplete upload, and no low quality photo is uploaded for the aforementioned file.

At Step 311, the data structure entry corresponding to each file in the queue is updated. The data structure entry is updated to reflect that the upload completed successfully, and that the photo was uploaded as a low quality file. The process then returns to Step 305, where it continuously scans for a high bandwidth connection, as described in paragraph 0026.

If, at Step 305, a high bandwidth connection is detected, such as when a user enters a 4G coverage area or a WiFi hotspot (such as those commonly found at coffee shops or airports), the process proceeds to Step 306. At Step 306, the software process analyzes the data structure entries for the individual photos in the queue and looks for incomplete high quality uploads. As previously stated, the data structure entry for each photo includes bits that indicate the upload status and quality for each photo. Thus, a photo that has been previously uploaded at low quality would have a "complete" indicator bit, but a "low quality" indicator as well. The software process generally attempts guarantee the eventual upload of a high quality photo file. Therefore, if a high bandwidth connection is available, the software process will upload a high quality photo file for photos that have been previously uploaded at low quality. The low quality photo file will be replaced with the high quality file on the server.

Therefore, at Step 307, high quality photo files are uploaded for any photo file that has not been completely uploaded at high quality. This includes photos for which no file has been uploaded at all (0% progress), photos for which a portion of a low quality file has been uploaded, photos for which a low quality upload has completed (100% progress), and photos for which a portion of a high quality photo has been uploaded. As described above, if the software process previously began a high quality upload for a given file and was interrupted due to loss of the high bandwidth connection, the software process resumes the upload where it left off, and transmits only the remaining data for the high quality file.

At Step 308, the software process updates the data structure entry for each uploaded photo with a "complete" and "high quality" indicator. Having uploaded all photos at high quality, the software process returns to the idle process at Step 302, and awaits more photos in the queue. Thus, in particular embodiments, once launched, the software process depicted in FIGURE 3 is constantly running on client device 122. When not actively uploading, the software process idles at one of three states. First, where the queue is empty, or all photos have been uploaded at high quality, the process idles at Step 302 and awaits photos from a camera application or other application to be saved to the queue. Second, where there is no data connection available, the process idles at 305 attempting to establish a wireless data connection of some type. Finally, when all photos have been uploaded at low quality, but a high quality data connection is unavailable, the software process idles between 307 and 305 awaiting a high bandwidth data connection.

FIGURE 4 illustrates an example photo queue 400 and the individual photo data structure entries stored therein. Photo queue 400 includes an entry for each photo. Each entry includes a unique identifier, or Photo ID 401. Photo ID 401 may take a number of various formats. In a particular embodiment, Photo ID 401 is of the format UserID_PhotoNumber, where "UserID" is the unique member identifier of the user account on social network 100 associated with client device 122. For example, in FIGURE 4, all the photos have a first segment "00123". This string uniquely identifies a specific member account on social network 100. At some point, either by installing a dedicated social networking application on client device 122 or through a manual set-up procedure, the user of client device 122 associated the device with the user ID (UID) "00123", therefore all file uploads and actions by client device 122 are immediately linked to the UID "00123." This disclosure contemplates all other forms of uniquely identifying a photo. The data structure entry for each photo also includes an upload status 402. In particular embodiments, the upload status is represented by a single bit, "1" for "complete" and "0" for "incomplete." In particular embodiments, the "incomplete" status also includes paused uploads. The data structure entry for each photo also includes a quality status 403 that indicates the quality at which a photo was uploaded. In particular embodiments, the quality status may be represented by a single bit, "1" for "high quality" and "0" for "low quality."

Similarly FIGURE 5 illustrates an example data structure entry where the uploaded status 402 and quality status 403 are combined into a single 2-bit field "uploaded" 501. In such an embodiment, a state "00" may indicate "incomplete upload, any quality." A state "01" may indicate "complete upload, low quality", and a state "10" may indicate "completed upload, high quality." This disclosure contemplates any manner of coding the upload and quality status bits in the data structure entries of FIGURE 4 and 5.

Furthermore, queues 400 and 500 both include a sharing column 404 and 502, respectively. The data structure entry for each photo may include a sharing status bit, that indicates whether a user wishes for his or her photo to be shared or private. In particular embodiments, photos that are to be shared are publicly visible to non-members of the social network, and photos that are not shared are only visible to members of the social network. In particular embodiments, photos that are to be shared are visible only to friends of the user account associated with client device 122, and photos that are not marked for sharing are only visible to the user itself. In particular embodiments, the user may set up sharing permissions for various groups of users. In particular embodiments, three or more sharing states may be utilized. The sharing states may coincide with privacy settings the user has already set up on the social network. This disclosure contemplates any manner of limiting access to other users or designating the specific users who may view photos tagged with various sharing status bits.

Returning to FIGURE 2, sharing icon 205 indicates whether the camera is in sharing mode. In sharing mode, photos taken by the camera on board client device 122 are automatically shared via a default setting. Indicator 205 may be toggled by pressing indicator 205 on display 206. In particular embodiments, where the user has set up more than two sharing modes, pressing indicator 205 cycles through various sharing modes. In particular embodiments, display 206 changes colors when sharing mode is enabled. For example, the display may take a blue tint when sharing is enabled, and a red tint when sharing is disabled. In particular embodiments, status bar 207 may change colors to indicate sharing status. In particular embodiments, a border may be inserted in display 206 to indicate a sharing mode. This disclosure contemplates all manners of visually, audibly, or through haptic feedback, indicating a sharing mode.

The camera software automatically tags the data structure entries of photos shot while in the sharing mode as "shared." The "sharing" status may be as simple as a "1" for "shared" and "0" for "not shared" bits in the data structure entry. In particular embodiments, the user sets up a default sharing level. In particular embodiments, there are multiple sharing statuses correlated with the different privacy settings of the user. For example, as user may set up three privacy settings, "publicly viewable", "friends only", and "private." Each data structure entry for a given photo has a status indicating one of these three sharing states. In particular embodiments, the software application embeds the sharing setting in the media file header transmitted to the social networking system. In particular embodiments, the sharing indicator is inserted in the photo media file header by the camera application itself. This disclosure contemplates any means of marking or tagging a media file to inform the social networking system of the privacy settings of the media file.

FIGURE 6 illustrates an example photo queue having a more detailed data structure entry for each photo. In the example of FIGURE 6, each file has a low quality upload status 601b, a low quality pointer 601a, a high quality upload status 602b, a high quality pointer 602a, and a sharing setting. Pointers 601 a and 602a indicate the next segment of the low quality and high quality, respectively, files to be uploaded.

Pointers 601 a and 602b may be in hexadecimal format to increase the address space necessary to accurately identify segments of files. This disclosure contemplates all manners of segmenting and identifying segments for the purposes of resuming an upload. The data structure entries of FIGURE 4 and 5 may also include pointer fields for the purpose of resuming file uploads.

Uploaded status fields 601 b and 602b indicate whether the low or high quality file has fully uploaded. Maintaining separate data fields for low and high quality files prevents unnecessary uploading of low quality files. For example, if a user fully completes a low quality upload, and subsequently has a high quality upload of the same photo file interrupted, upon entering an area with a low bandwidth connection, the software process will not re-upload the entire low quality file, because the data structure indicates that a low quality file has been previously uploaded. Storing an extra few bits of data and a pointer can significantly save radio and battery resources.

In particular embodiments, the sharing mode may be set to a default value by the user. In particular embodiments, the user may set up automatic triggers to enable or disable sharing. For example, the user may set up his or her client device 122 such that photos taken between 11 PM and 4AM are not to be shared. In particular embodiments, the user of client device 122 may geofence certain areas for default sharing modes. For example, the user may select a particular location or establishment for which photos taken in the geographic vicinity of the establishment are never to be shared. Photos that have not been marked for sharing are still nonetheless uploaded to social network 100's servers, however, they are only visible to the user of client device 122, or alternatively, subject to established privacy settings of the user.

Social networking system 100 receives, at one or more servers, the uploaded media files via network cloud 121 and system front end 120. In particular embodiments, social networking system 100 receives the media files through a dedicated application program interface (API). This disclosure contemplates any manner of receiving file uploads from client device 122. Social networking system reads the meta-data associated with the file upload and ascertains the social networking member account associated with client device 122. In particular embodiments, the software process on client device 122 transmits the data structure entry from FIGS. 4-6 associated with the photo file, and the server reads the UID in the photo identifier. In other embodiments, a handshaking process between the server and client device 122 informs the server of the account associated with the incoming upload. This disclosure contemplates any manner of user account determination.

The server, upon receiving a photo or other multimedia file, reads the data in the media header or data structure entry to determine the sharing setting of the file. Based on the sharing setting of the file, the server may store the file in a particular folder in photo database 105, such as a public or private folder. In particular embodiments, the server stores all uploaded files in a single folder for mobile uploads, but with varying privacy settings for each photo. In particular embodiments, the server determines whether the received file is a high quality or low quality photo. In particular embodiments, upon receiving a low quality photo, the server expects to eventually receive a high quality photo. In particular embodiments, upon receiving the high quality photo, the server may replace the low quality photo with the high quality photo for display. In particular embodiments, the server keeps a copy of the low quality photo for various purposes. The server may also auto-tag the photo based on information transmitted along with the photo, such as location data, check-in data, and friend data. For example, if a user checks into a particular location and indicates he or she is at the location with other members of the social network, the server may use that information to auto-tag the photo. For instance, if a face recognition algorithm has narrowed down a face to four potential friends of the uploading user, the algorithm will select the friend that was also mentioned in the check in.

Implementations of the foregoing provide a system that allows a user to share captured multimedia objects, such as photos, in substantially real-time, subject to serialization and other pre-upload processing, at a quality level commensurate with the bandwidth of the available wireless connection. Furthermore, such an implementation automatically delivers a high-quality image to the social networking site for sharing when a suitable wireless data connection is available. Therefore, a users is effectively ensured that multimedia objects captured from his or her mobile device are, automatically and without user interaction, shared as soon as possible, and will be eventually shared at high quality.

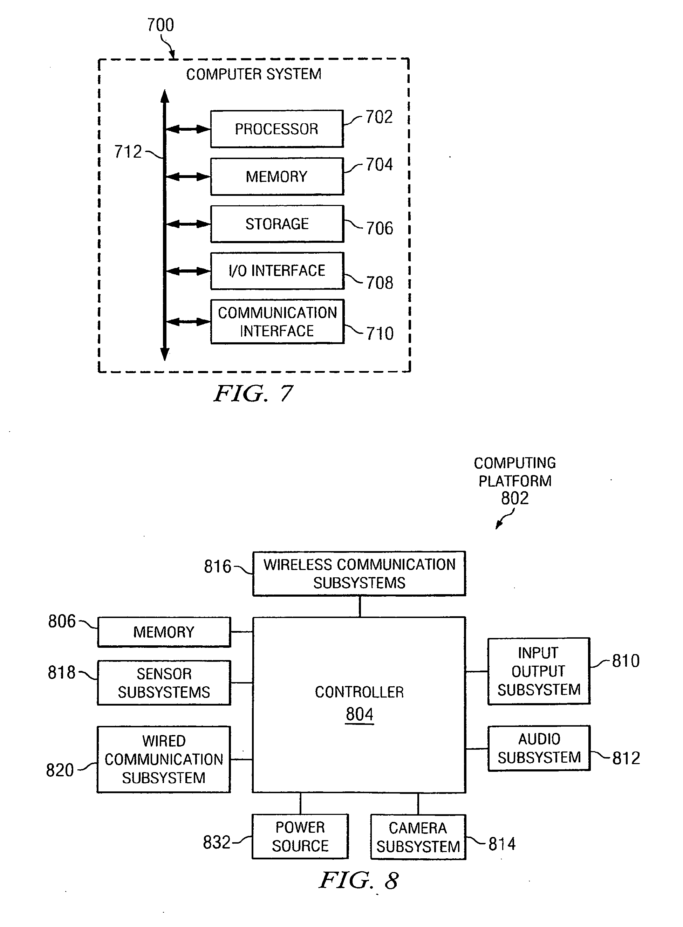

FIGURE 7 illustrates an example computer system 700, which may be used with some embodiments of the present invention. This disclosure contemplates any suitable number of computer systems 700. This disclosure contemplates computer system 700 taking any suitable physical form. Where appropriate, computer system 700 may include one or more computer systems 700; be unitary or distributed; span multiple locations; span multiple machines; or reside in a cloud, which may include one or more cloud components in one or more networks. Where appropriate, one or more computer systems 700 may perform without substantial spatial or temporal limitation one or more steps of one or more methods described or illustrated herein. As an example and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In particular embodiments, computer system 700 includes a processor 702, memory 704, storage 706, an input/output (I/O) interface 706, a communication interface 710, and a bus 712. Although this disclosure describes and illustrates a particular computer system having a particular number of particular components in a particular arrangement, this disclosure contemplates any suitable computer system having any suitable number of any suitable components in any suitable arrangement.

In particular embodiments, processor 702 includes hardware for executing instructions, such as those making up a computer program. As an example and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular embodiments, processor 702 may include one or more internal caches for data, instructions, or addresses. The present disclosure contemplates processor 702 including any suitable number of any suitable internal caches, where appropriate.

In particular embodiments, memory 704 includes main memory for storing instructions for processor 702 to execute or data for processor 702 to operate on. One or more memory buses (which may each include an address bus and a data bus) may couple processor 702 to memory 704. Although this disclosure describes and illustrates particular memory, this disclosure contemplates any suitable memory.

In particular embodiments, storage 706 includes mass storage for data or instructions. This disclosure contemplates mass storage 706 taking any suitable physical form. Although this disclosure describes and illustrates particular storage, this disclosure contemplates any suitable storage.

In particular embodiments, I/O interface 706 includes hardware, software, or both providing one or more interfaces for communication between computer system 700 and one or more I/O devices. Computer system 700 may include one or more of these I/O devices, where appropriate. One or more of these I/O devices may enable communication between a person and computer system 700. Although this disclosure describes and illustrates a particular I/O interface such as a touchscreen, this disclosure contemplates any suitable I/O interface.

In particular embodiments, communication interface 710 includes hardware, software, or both providing one or more interfaces for communication (such as, for example, packet-based communication) between computer system 700 and one or more other computer systems 700 or one or more networks. Although this disclosure describes and illustrates a particular communication interface, this disclosure contemplates any suitable communication interface.

In particular embodiments, bus 712 includes hardware, software, or both coupling components of computer system 700 to each other. Although this disclosure describes and illustrates a particular bus, this disclosure contemplates any suitable bus or interconnect.

This disclosure contemplates one or more computer-readable storage media implementing any suitable storage. In particular embodiments, a computer-readable storage medium implements one or more portions of processor 702 (such as, for example, one or more internal registers or caches), one or more portions of memory 704, one or more portions of storage 706, or a combination of these, where appropriate. In particular embodiments, one or more computer-readable storage media embody software. Herein, reference to software may encompass one or more applications, bytecode, one or more computer programs, one or more executables, one or more instructions, logic, machine code, one or more scripts, or source code, and vice versa, where appropriate. In particular embodiments, software includes one or more application programming interfaces (APIs). This disclosure contemplates any suitable software written or otherwise expressed in any suitable programming language or combination of programming languages.

The client-side functionality described above can be implemented as a series of instructions stored on a computer-readable storage medium that, when executed, cause a programmable processor to implement the operations described above.

While the client device 122 may be implemented in a variety of different hardware and computing systems, FIGURE 8 shows a schematic representation of the main components of an example computing platform 802, according to various particular embodiments. Multipoint sensing devices generally include a controller 804 which may comprise a microcontroller or one or more processors configured to execute instructions and to carry out operations associated with a computing platform. In various embodiments, controller 804 may be implemented as a single-chip, multiple chips and/or other electrical components including one or more integrated circuits and printed circuit boards. Controller 804 may optionally contain a cache memory unit for temporary local storage of instructions, data, or computer addresses. By way of example, using instructions retrieved from memory, controller 804 may control the reception and manipulation of input and output data between components of computing platform 802.

Controller 804 together with a suitable operating system may operate to execute instructions in the form of computer code and produce and use data. The operating system, other computer code (including control client 807 described below) and/or data may be physically stored within a memory block 806 that is operatively coupled to controller 804.

Memory block 806 encompasses one or more storage media and generally provides a place to store computer code (e.g., software and/or firmware) and data that are used by the computing platform 802. Memory block 806 may also include one or more fixed storage devices in the form of, by way of example, solid-state hard disk drives (HDDs), among other suitable forms of memory coupled bi-directionally to controller 804. Information may also reside on a removable storage medium loaded into or installed in multipoint sensing devices when needed.

Controller 804 is also generally coupled to a variety of interfaces such as graphics control, video interface, input interface, output interface, and storage interface, and network interface, and these interfaces in turn are coupled to the appropriate devices. In certain embodiment, Controller 804 may connected to an input structure 814 and display 816 may be provided together, such an in the case of a touchscreen where a touch sensitive mechanism is provided in conjunction with the display 816. In such embodiments, the user may select or interact with displayed interface elements via the touch sensitive mechanism. In this way, the displayed interface may provide interactive functionality, allowing a user to navigate the displayed interface by touching the display 816.

Electric signals (e.g., analog) may be produced by microphone 810 and fed to earpiece 812. Controller 804 may receive instruction signals from input structure 814 and control the operation of display 816. By way of example, display 816 may incorporate liquid crystal display (LCD), light emitting diode (LED), Interferometric modulator display (IMOD), or any other suitable display technology. Audio signals may be transmitted and received by means of an antenna 817 that may be connected through a radio interface 820 or audio input interface such as microphone 824 to codec 822 configured to process signals under control of controller 804. Additionally, multipoint sensing devices may be powered power source 832.

Mobile device may also include one or more user input devices 834 (other than input structure 814) that are operatively coupled to the controller 804. Generally, input devices 834 are configured to transfer data, commands and responses from the outside world into multipoint sensing devices. By way of example, mobile device may include a keyboard or mouse. Input devices 834 may also include one or more hard buttons.

Display device 816 is generally configured to display a graphical user interface (GUI) that provides an easy to use visual interface between a user of the computing platform 802 and the operating system or application(s) running on the mobile device. Generally, the GUI presents programs, files and operational options with graphical images. During operation, the user may select and activate various graphical images displayed on the display 816 in order to initiate functions and tasks associated therewith.

Herein, reference to a computer-readable storage medium encompasses one or more non-transitory, tangible computer-readable storage media possessing structure.

The present disclosure encompasses all changes, substitutions, variations, alterations, and modifications to the example embodiments herein that a person having ordinary skill in the art would comprehend. Similarly, where appropriate, the appended claims encompass all changes, substitutions, variations, alterations, and modifications to the example embodiments herein that a person having ordinary skill in the art would comprehend.

## Claims

1. A method comprising, by one or more computing systems:
accessing a queue of multimedia objects to be uploaded via a wireless connection, each multimedia object having a data structure entry comprising at least an upload progress value and an upload quality value;
for each multimedia object in the queue whose entry does not indicate a completed upload,
determining the wireless connection type;
automatically uploading a multimedia file corresponding to the object, wherein the quality of the multimedia file is based on the bandwidth of the detected wireless connection type; and
updating the entry associated with the object.

2. The method of Claim 1, further comprising:
upon capturing a multimedia object, inserting the object into the queue for upload.

3. The method of Claim 1 or 2, wherein the data structure entry comprises a privacy value.

4. The method of Claim 3, further comprising:
modulating one or more attributes of a camera graphical user interface to indicate one of a plurality of privacy modes indicating that captured multimedia objects are to be shared in accordance with a plurality of privacy settings upon capture; and
upon capturing a multimedia object, inserting the object into the queue with a privacy value in accordance with the privacy mode indicated at the time of capture.

5. The method of Claim 3 or 4, further comprising tagging the multimedia file with the privacy mode prior to uploading.

6. The method of any of Claims 1 to 5, wherein the quality of the multimedia file is low-resolution for a low bandwidth connection type.

7. The method of any of Claims 1 to 6, wherein the quality of the multimedia file is high resolution for a high bandwidth connection type.

8. The method of any of Claims 1 to 7, further comprising:
upon detecting the availability of a high bandwidth wireless connection, reading the data structure entry associated with each multimedia object in the queue; and
uploading a high quality multimedia file for each multimedia object in the queue whose data structure entry does not indicate a completed high quality multimedia file upload.

9. The method of Claim 8, wherein uploading a high quality multimedia file comprises starting the upload at the point in the high quality multimedia file associated with the upload progress value.

10. The method of any of Claims 3 to 5, wherein the multimedia file is uploaded to different locations based on the privacy value.

11. One or more computer-readable non-transitory storage media embodying software that is operable when executed to perform a method according to any of claims 1 to 10.

12. A system comprising: one or more processors; and a memory coupled to the processors comprising instructions executable by the processors, the processors operable when executing the instructions to perform a method according to any of the claims 1 to 10.

## Patentansprüche

1. Verfahren, welches mittels einem oder mehrerer Rechnersysteme folgende Schritte umfasst:
Zugreifen auf eine Warteschlange mit Multimedia-Objekten, die über eine drahtlose Verbindung hochzuladen sind, wobei jedes der Multimedia-Objekte einen Eintritt in die Datenstruktur aufweist, der mindestens einen Wert für den Fortschritt beim Hochladen und einen Wert für die Qualität beim Hochladen umfasst;
wobei für jedes Multimedia-Objekt in der Warteschlange, dessen Eintritt nicht auf einen abgeschlossenen Hochladevorgang hinweist, der Typ der drahtlosen Verbindung bestimmt wird;
automatisch eine Multimedia-Datei hochgeladen wird, die dem Objekt entspricht, wobei der Qualität der Multimedia-Datei die Bandbreite des Typs der erfassten drahtlosen Verbindung zugrunde liegt; und
Aktualisieren des dem Objekt zugeordneten Eintritts.

2. Verfahren nach Anspruch 1, welches des Weiteren folgende Schritte umfasst:
nach Erfassen eines Multimedia-Objekts Einfügen des Objekts in die Warteschlange zum Hochladen.

3. Verfahren nach Anspruch 1 oder 2, bei welchem der Eintritt in die Datenstruktur einen Datenschutzwert umfasst.

4. Verfahren nach Anspruch 3, welches des Weiteren folgende Schritte umfasst:
Modulieren eines oder mehrerer der Attribute einer graphischen Benutzerschnittstelle einer Kamera zur Anzeige eines von vielen Datenschutzmodi, die darauf hinweisen, dass die erfassten Multimedia-Objekte entsprechend einer Vielzahl von Datenschutzeinstellungen nach Erfassung geteilt werden sollen; und
nach Erfassung eines Multimedia-Objekts Einfügen des Objekts in die Warteschlange mit einem Datenschutzwert gemäß dem Datenschutzmodus, der zum Zeitpunkt der Erfassung angezeigt wird.

5. Verfahren nach Anspruch 3 oder 4, welches des Weiteren einen Schritt zum Markieren der Multimedia-Datei mit dem Datenschutzmodus vor dem Hochladen umfasst.

6. Verfahren nach einem der Ansprüche 1 bis 5, bei welchem die Qualität der Multimedia-Datei bei einem Verbindungstyp mit geringer Bandbreite eine geringe Auflösung besitzt.

7. Verfahren nach einem der Ansprüche 1 bis 6, bei welchem die Qualität der Multimedia-Datei bei einem Verbindungstyp mit großer Bandbreite eine hohe Auflösung besitzt.

8. Verfahren nach einem der Ansprüche 1 bis 7, welches des Weiteren folgende Schritte umfasst:
nach Erfassung der Verfügbarkeit einer drahtlosen Verbindung mit großer Bandbreite auslesen des Eintritts in die Datenstruktur, die jedem Multimedia-Objekt in der Warteschlange zugewiesen ist; und
Hochladen einer Multimedia-Datei hoher Qualität für jedes Multimedia-Objekt in der Warteschlange, dessen Eintritt in die Datenstruktur nicht auf einen abgeschlossenen Vorgang des Hochladens einer Multimedia-Datei mit hoher Qualität hinweist.

9. Verfahren nach Anspruch 8, bei welchem das Hochladen einer Multimedia-Datei hoher Qualität den Schritt umfasst, dass der Hochladevorgang an dem Punkt in der Multimedia-Datei hoher Qualität beginnt, der mit dem Wert für den Fortschritt des Hochladevorgangs verknüpft ist.

10. Verfahren nach einem der Ansprüche 3 bis 5, bei welchem die Multimedia-Datei auf der Grundlage des Datenschutzwerts an unterschiedliche Stellen hochgeladen wird.

11. Ein oder mehrere mit Computer lesbare nicht-flüchtige Speichermedien, welche eine Software verkörpern, die betriebsbereit ist, wenn sie zur Durchführung eines Verfahrens nach einem der Ansprüche 1 bis 10 ausgeführt wird.

12. System, welches folgendes umfasst: einen oder mehrere Prozessoren und einem Speicher, der mit den Prozessoren gekoppelt ist und dabei von den Prozessoren ausführbare Anweisungen enthält, wobei die Prozessoren betriebsbereit sind, wenn sie die Anweisungen ausführen, um ein Verfahren nach einem der Ansprüche 1 bis 10 durchzuführen.

## Revendications

1. Procédé comprenant par un ou plusieurs systèmes informatiques:
accéder à une file d'attente d'objets multimédias à télécharger via une connexion sans fil, chaque objet multimédia ayant une entrée de structure de données comprenant au moins une valeur de progression de téléchargement et une valeur de qualité de téléchargement;
pour chaque objet multimédia dans la file d'attente dont l'entrée n'indique pas un téléchargement terminé,
déterminer le type de connexion sans fil;
télécharger automatiquement un fichier multimédia correspondant à l'objet, la qualité du fichier multimédia étant basée sur la bande passante du type de connexion sans fil détecté; et
mettre à jour l'entrée associée à l'objet.

2. Procédé selon la revendication 1, comprenant en outre:
lors de la capture d'un objet multimédia, insérer l'objet dans la file d'attente de téléchargement.

3. Procédé selon l'une des revendication 1 ou 2, selon lequel l'entrée de structure de données comprend une valeur de confidentialité.

4. Procédé selon la revendication 3, comprenant en outre:
moduler un ou plusieurs attributs d'une interface utilisateur graphique d'appareil photo pour indiquer un parmi une pluralité de modes de confidentialité indiquant que les objets multimédias capturés doivent être partagés conformément à une pluralité de paramètres de confidentialité lors de la capture; et
lors de la capture d'un objet multimédia, insérer l'objet dans la file d'attente avec une valeur de confidentialité conformément au mode de confidentialité indiqué au moment de la capture.

5. Procédé selon l'une des revendication 3 ou 4, comprenant en outre à étiqueter le fichier multimédia avec le mode de confidentialité avant de le télécharger.

6. Procédé selon l'une quelconque des revendications 1 à 5, selon lequel la qualité du fichier multimédia est basse résolution pour un type de connexion à faible bande passante.

7. Procédé selon l'une quelconque des revendications 1 à 6, selon lequel la qualité du fichier multimédia est haute résolution pour un type de connexion à large bande passante.

8. Procédé selon l'une quelconque des revendications 1 à 7, comprenant en outre:
lors de la détection de la accessibilité d'une connexion sans fil à large bande passante, lire l'entrée de structure de données associée à chaque objet multimédia dans la file d'attente; et
télécharger un fichier multimédia de haute qualité pour chaque objet multimédia dans la file d'attente dont l'entrée de structure de données n'indique pas un téléchargement terminé de fichier multimédia de haute qualité.

9. Procédé selon la revendication 8, selon lequel l'étape de télécharger un fichier multimédia de haute qualité comprend le fait de démarrer le téléchargement au point dans le fichier multimédia de haute qualité qui est associé à la valeur de progression de téléchargement.

10. Procédé selon l'une quelconque des revendications 3 à 5, selon lequel le fichier multimédia est téléchargé à des emplacements différents basés sur la valeur de confidentialité.

11. Un ou plusieurs supports de stockage non transitoire lisibles par ordinateur incorporant un logiciel qui est utilisable lorsqu'il est exécuté pour mettre en oeuvre un procédé selon l'une quelconque des revendications 1 à 10.

12. Système comprenant: un ou plusieurs processeurs et une mémoire couplée aux processeurs qui comprend des instructions exécutables par les processeurs, les processeurs étant utilisables pour exécuter les instructions pour mettre en oeuvre un procédé selon l'une quelconque des revendications 1 à 10.
